(19) Europäisches Patentamt
European Patent Office
Office européen des brevets

(11) **EP 4 170 926 A1**

(12) **EUROPEAN PATENT APPLICATION**

(43) Date of publication:
**26.04.2023 Bulletin 2023/17**

(21) Application number: **22199504.6**

(22) Date of filing: **04.10.2022**

(51) International Patent Classification (IPC):
*H04B 7/155* (2006.01)    *H04B 7/06* (2006.01)

(52) Cooperative Patent Classification (CPC):
**H04B 7/0617; H04B 7/15578**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2021 US 202163270115 P**

(71) Applicant: **Nokia Solutions and Networks Oy 02610 Espoo (FI)**

(72) Inventors:
• **YANG, Roy**
  **Buffalo Grove (US)**
• **DU, Jinfeng**
  **West Windsor (US)**

(74) Representative: **Nokia EPO representatives Nokia Technologies Oy Karakaari 7 02610 Espoo (FI)**

(54) **DYNAMIC ISOLATION MEASUREMENT OF BEAMFORMING REPEATER**

(57) A network element includes at least one processor and at least one memory including computer program code. The at least one memory and the computer program code are configured to, with the at least one processor, cause the network element to adjust an internal gain between a fronthaul panel and an access panel at a beamforming repeater in a wireless network based on spatial direction dependent isolation measurement information from the beamforming repeater. The isolation measurement may be carried out in the background using the existing 5th Generation New Radio (NR) physical channel signals during a time division duplex (TDD) uplink-downlink gap.

**FIG. 1**

EP 4 170 926 A1

**Description**

TECHNICAL FIELD

One or more example embodiments relate to wireless communications networks.

BACKGROUND

Fifth generation (5G) wireless communications networks are the next generation of mobile communications networks. Standards for 5G communications networks are currently being developed by the 3rd Generation Partnership Project (3GPP). These standards are known as 3GPP New Radio (NR) standards.

SUMMARY

The scope of protection sought for various example embodiments is set out by the independent claims. The example embodiments and/or features, if any, described in this specification that do not fall under the scope of the independent claims are to be interpreted as examples useful for understanding various embodiments.

According to one or more example embodiments, to manage the internal gain of a beamforming repeater (e.g., in order to improve and/or maximize the dynamic gain of a beamforming repeater's power amplifier) and/or avoid self-oscillation, a donor gNB needs to be aware of the isolation in each spatial direction (on each beam) in the steering range of the beamforming repeater. At least one example embodiment proposes a mechanism for obtaining isolation measurements and the signaling associated therewith.

In one example, a donor gNB requests the beamforming repeater to perform isolation measurements between the steerable beam in the access link (repeater to UE) and the fixed beam in the fronthaul link (repeater to donor gNB), for a plurality of spatial directions (a plurality of beams). The beamforming repeater reports the measured isolation (also referred to as isolation values) across the steering range to the donor gNB. The donor gNB, once the isolation measurements are received, may then configure the internal gain of the beamforming repeater in the direction of the UE (on a per-beam basis) to improve signal quality and/or coverage within an isolation constraint in the same direction.

One or more example embodiments provide methods, apparatuses and/or non-transitory computer readable storage mediums for dynamic isolation measurement to more effectively utilize a beamforming repeater in, for example, a 5th Generation (5G) wireless communication system.

One or more example embodiments provide signaling between a donor gNB and a beamforming repeater to support an isolation measurement procedure to facilitate more effective utilization of the beamforming repeater.

One or more example embodiments provide methods, apparatuses and/or non-transitory computer readable storage mediums for (e.g., dynamic) adjustment of internal gain at a beamforming repeater on a per-beam basis based on spatially dependent isolation measurement information.

One or more example embodiments provide beamforming repeaters supporting spatial domain isolation measurement and methods for isolation measurement at the same. At least one example embodiment provides a network element comprising at least one processor and at least one memory including computer program code. The at least one memory and the computer program code are configured to, with the at least one processor, cause the network element to adjust an internal gain between a fronthaul panel and an access panel at a beamforming repeater in a wireless network based on spatial direction dependent isolation measurement information from the beamforming repeater.

At least one example embodiment provides a network element comprising a transceiver and a means for adjusting an internal gain between a fronthaul panel and an access panel at a beamforming repeater in a wireless network based on spatial direction dependent isolation measurement information from the beamforming repeater.

At least one example embodiment provides a method for controlling a beamforming repeater in a wireless network, the method comprising: adjusting an internal gain between a fronthaul panel and an access panel at the beamforming repeater based on spatial direction dependent isolation measurement information from the beamforming repeater.

A non-transitory computer readable storage medium storing computer readable instructions that, when executed by at least one processor at a network element, cause the network element to perform a method for controlling the beamforming repeater, the method comprising: adjusting an internal gain between a fronthaul panel and an access panel at the beamforming repeater based on spatial direction dependent isolation measurement information from the beamforming repeater.

The spatial direction dependent isolation measurement information may include a spatial direction dependent isolation measurement for each of a plurality of beams in a steering range of the access panel.

The internal gain may be adjusted on a per-beam basis.

The at least one memory and the computer program code may be configured to, with the at least one processor, cause the network element to: transmit an isolation measurement request to the beamforming repeater, the isolation measurement request requesting the spatial direction dependent isolation measurement information for an access beam at the access panel; and receive the spatial direction dependent isolation measurement information transmitted in response to the isolation measurement request.

The isolation measurement request may include a measurement profile identifier indicative of measurement parameters for performing a spatial direction dependent isolation measurement for the access beam.

The at least one memory and the computer program code may be configured to, with the at least one processor, cause the network element to: transmit an isolation measurement configuration message to the beamforming repeater, the isolation measurement configuration message requesting the spatial direction dependent isolation measurement information and defining parameters for a spatial direction dependent isolation measurement for access beams within a steering range of the access panel; and receive the spatial direction dependent isolation measurement information transmitted in response to the isolation measurement configuration message.

The parameters may include at least one of a measurement object, a measurement report configuration, measurement identification information or quantity configuration information.

The spatial direction dependent isolation measurement information may be in the form of an isolation mask.

At least one example embodiment provides a beamforming repeater comprising: at least one access panel configured to communicate via a plurality of beams; at least one fronthaul panel; at least one processor; and at least one memory including computer program code. The at least one memory and the computer program code are configured to, with the at least one processor, cause the beamforming repeater to: generate, for at least one of the plurality of beams, spatial direction dependent isolation measurement information for isolation between a first of the at least one access panel and a first of the at least one fronthaul panel; and output the spatial direction dependent isolation measurement information to a network element.

At least one example embodiment provides a beamforming repeater comprising: at least one access panel configured to communicate via a plurality of beams; at least one fronthaul panel; means for generating, for at least one of the plurality of beams, spatial direction dependent isolation measurement information for isolation between a first of the at least one access panel and a first of the at least one fronthaul panel; and means for outputting the spatial direction dependent isolation measurement information to a network element.

At least one example embodiment provides a method for operating a beamforming repeater having at least one fronthaul panel and at least one access panel configured to communicate via a plurality of beams, the method comprising: generating, for at least one of the plurality of beams, spatial direction dependent isolation measurement information for isolation between a first of the at least one access panel and a first of the at least one fronthaul panel; and outputting the spatial direction dependent isolation measurement information to a network element.

A non-transitory computer readable storage medium storing computer readable instructions that, when executed by at least one processor at a beamforming repeater having at least one fronthaul panel and at least one access panel configured to communicate via a plurality of beams, cause the beamforming repeater to perform a method for operating the beamforming repeater, the method comprising: generating, for at least one of the plurality of beams, spatial direction dependent isolation measurement information for isolation between a first of the at least one access panel and a first of the at least one fronthaul panel; and outputting the spatial direction dependent isolation measurement information to a network element.

The at least one memory and the computer program code may be configured to, with the at least one processor, cause the beamforming repeater to adjust, for the at least one of the plurality of beams, an internal gain between the first of the at least one fronthaul panel and the first of the at least one access panel based on internal gain control information from the network element, the internal gain control information generated based on the spatial direction dependent isolation measurement information.

The at least one memory and the computer program code may be configured to, with the at least one processor, cause the beamforming repeater to adjust the internal gain on a per-beam basis.

The spatial direction dependent isolation measurement information may include a spatial direction dependent isolation measurement for each of the plurality of beams.

The at least one memory and the computer program code may be configured to, with the at least one processor, cause the beamforming repeater to: receive an isolation measurement request requesting a spatial direction dependent isolation measurement for the at least one of the plurality of beams; and generate the spatial direction dependent isolation measurement information based on the spatial direction dependent isolation measurement and in response to the isolation measurement request.

The isolation measurement request may include a measurement profile identifier indicative of measurement parameters for performing the spatial direction dependent isolation measurement.

The at least one memory and the computer program code may be configured to, with the at least one processor, cause the beamforming repeater to: receive an isolation measurement configuration message requesting the spatial direction dependent isolation measurement information and defining parameters for spatial direction dependent isolation measurement for the at least one of the plurality of beams; and generate the spatial direction dependent isolation measurement information in response to the isolation measurement configuration message.

The parameters may include at least one of a measurement object, a measurement report configuration, measurement identification information or quantity configuration information.

At least one other example embodiment provides a beamforming repeater comprising: at least one access panel configured to communicate via a plurality of beams; at least one fronthaul panel; at least one processor; and at least one memory including computer program code. The at least one memory and the computer program code are configured to, with the at least one processor, cause the beamforming repeater to: adjust an internal gain between a first of the at least one fronthaul panel and a first of the at least one access panel for at least one of the plurality of beams on a per-beam basis, the internal gain being adjusted based on internal gain control information from a network element, the internal gain control information based on spatial direction dependent isolation measurement information for isolation between the first of the at least one access panel and the first of the at least one fronthaul panel.

At least one other example embodiment provides a beamforming repeater comprising: at least one access panel configured to communicate via a plurality of beams; at least one fronthaul panel; and means for adjusting an internal gain between a first of the at least one fronthaul panel and a first of the at least one access panel for at least one of the plurality of beams on a per-beam basis, the internal gain being adjusted based on internal gain control information from a network element, the internal gain control information based on spatial direction dependent isolation measurement information for isolation between the first of the at least one access panel and the first of the at least one fronthaul panel.

At least one other example embodiment provides a method for operating a beamforming repeater having at least one access panel configured to communicate via a plurality of beams and at least one fronthaul panel, the method comprising: adjusting an internal gain between a first of the at least one fronthaul panel and a first of the at least one access panel for at least one of the plurality of beams on a per-beam basis, the internal gain being adjusted based on internal gain control information from a network element, the internal gain control information based on spatial direction dependent isolation measurement information for isolation between the first of the at least one access panel and the first of the at least one fronthaul panel.

A non-transitory computer readable storage medium storing computer readable instructions that, when executed by at least one processor at a beamforming repeater having at least one access panel configured to communicate via a plurality of beams and at least one fronthaul panel, cause the beamforming repeater to perform a method for operating the beamforming repeater, the method comprising: adjusting an internal gain between a first of the at least one fronthaul panel and a first of the at least one access panel for at least one of the plurality of beams on a per-beam basis, the internal gain being adjusted based on internal gain control information from a network element, the internal gain control information based on spatial direction dependent isolation measurement information for isolation between the first of the at least one access panel and the first of the at least one fronthaul panel.

The at least one memory and the computer program code may be configured to, with the at least one processor, cause the beamforming repeater to: generate the spatial direction dependent isolation measurement information for the plurality of beams; and output the spatial direction dependent isolation measurement information to the network element.

At least one other example embodiment provides a beamforming repeater comprising: at least a first panel and a second panel, at least one of the first panel or the second panel being configured to communicate via a plurality of beams; at least one processor; and at least one memory including computer program code. The at least one memory and the computer program code are configured to, with the at least one processor, cause the beamforming repeater to: transmit a signal from the first panel via a transmit beam; receive a self-interference signal at the second panel via a receive beam, the self-interference signal being a delayed version of the signal transmitted from the first panel via the transmit beam; obtain at least two average receive power measurements for the self-interference signal received via the receive beam, each of the at least two average receive power measurements being obtained during a sampling interval from among at least two sampling intervals; determine an isolation measurement parameter for the beamforming repeater based on the at least two average receive power measurements; and estimate the isolation between the transmit beam and the receive beam based on the isolation measurement parameter and an internal gain of the beamforming repeater.

At least one other example embodiment provides a beamforming repeater comprising: at least a first panel and a second panel, at least one of the first panel or the second panel being configured to communicate via a plurality of beams; means for transmitting a signal from the first panel via a transmit beam; means for receiving a self-interference signal at the second panel via a receive beam, the self-interference signal being a delayed version of the signal transmitted from the first panel via the transmit beam; means for obtaining at least two average receive power measurements for the self-interference signal received via the receive beam, each of the at least two average receive power measurements being obtained during a sampling interval from among at least two sampling intervals; means for determining an isolation measurement parameter for the beamforming repeater based on the at least two average receive power measurements; and means for estimating the isolation between the transmit beam and the receive beam based on the isolation measurement parameter and an internal gain of the beamforming repeater.

At least one other example embodiment provides a method for operating a beamforming repeater having at least a first panel and a second panel, at least one of the first panel or the second panel being configured to communicate via a plurality of beams, the method comprising: transmitting a signal from the first panel via a transmit beam; receiving a self-interference signal at the second panel via a receive beam, the self-interference signal being a delayed version of the signal transmitted from the first panel via the transmit beam; obtaining at least two average receive power measurements for the self-interference signal received via the receive beam, each of the at least two average receive power measurements being obtained during a sampling interval from among at least two sampling intervals; determining an isolation measurement parameter for the beamforming repeater based on the at least two average receive power measurements; and estimating the isolation between the transmit beam and the receive beam based on the isolation measurement parameter and an internal gain of the beamforming repeater.

A non-transitory computer readable storage medium storing computer readable instructions that, when executed by at least one processor at a beamforming repeater having at least a first panel and a second panel, wherein at least one of the first panel or the second panel being configured to communicate via a plurality of beams, causes the beamforming repeater to perform a method comprising: transmitting a signal from the first panel via a transmit beam; receiving a self-interference signal at the second panel via a receive beam, the self-interference signal being a delayed version of the signal transmitted from the first panel via the transmit beam; obtaining at least two average receive power measurements for the self-interference signal received via the receive beam, each of the at least two average receive power measurements being obtained during a sampling interval from among at least two sampling intervals; determining an isolation measurement parameter for the beamforming repeater based on the at least two average receive power measurements; and estimating the isolation between the transmit beam and the receive beam based on the isolation measurement parameter and an internal gain of the beamforming repeater.

The at least two sampling intervals may be within at least one of an uplinkdownlink switching gap or a downlink-uplink switching gap.

The signal may be a 5th Generation New Radio physical channel signal.

Each of the at least two sampling intervals may represent an internal delay of the beamforming repeater.

BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of this disclosure.

FIG. 1 is a block diagram illustrating an example embodiment of a beamforming repeater in communication with a donor gNB and a user equipment (UE) in the downlink (DL).

FIG. 2A is a more detailed block diagram illustrating a beamforming repeater operating in the DL, according to example embodiments.

FIG. 2B is a more detailed block diagram illustrating a beamforming repeater operating in the uplink (UL), according to example embodiments.

FIG. 3A is a functional block diagram illustrating self-interference during the DL-UL switching gap, according to example embodiments.

FIG. 3B is a functional block diagram illustrating self-interference during the UL-DL switching gap, according to example embodiments.

FIG. 4 illustrates an example signal at a receiving antenna panel after four loops of echoes.

FIG. 5 illustrates example measured receive signal power at a beamforming repeater at each sampling interval, according to example embodiments.

FIG. 6 illustrates example isolation measurements with relatively small delay spread in the self-interference channel, according to example embodiments.

FIG. 7 illustrates example isolation measurements for relatively small delay spread for the incoming signal channel, according to example embodiments.

FIG. 8 illustrates example isolation measurements when the delay spread is relatively large, according to example embodiments.

FIG. 9 is a signal flow diagram illustrating a method according to example embodiments.

FIG. 10 is a signal flow diagram illustrating another method according to example embodiments.

FIG. 11 is a graph illustrating an example in which a donor gNB schedules UE traffic in conjunction with the repeater isolation measurement, according to example embodiments.

FIG. 12 is a flow chart illustrating a method according to example embodiments.

FIG. 13 is a flow chart illustrating another method according to example embodiments.

FIG. 14 is a block diagram illustrating an example embodiment of a network element.
FIG. 15 is a flow chart illustrating another method according to example embodiments.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

It should be understood that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

While one or more example embodiments may be described from the perspective of radio access network (RAN) or radio network elements (e.g., a gNB, beamforming repeater, etc.), user equipment (UE), or the like, it should be understood that one or more example embodiments discussed herein may be performed by one or more processors (or processing circuitry) at the applicable device. For example, according to one or more example embodiments, at least one memory may include or store computer program code, and the at least one memory and the computer program code may be configured to, with at least one processor, cause a radio network element (beamforming repeater, gNB, etc.) to perform the operations discussed herein.

As discussed herein, the terminology "one or more" and "at least one" may be used interchangeably.

As discussed herein, a gNB may also be referred to as a base station, access point, enhanced NodeB (eNodeB), or more generally, a radio access network element, radio network element, or network node. A UE may also be referred to herein as a mobile station, and may include a mobile phone, a cell phone, a smartphone, a handset, a personal digital assistant (PDA), a tablet, a laptop computer, a phablet, a vehicle including a vehicular communication system, or the like.

As discussed herein, transmission resources may also be referred to as radio or cellular resources for transmitting, and may include, for example, time and/or frequency resources for transmitting information and/or data between devices.

Although some example embodiments may be discussed with regard to downlink transmissions (or alternatively uplink transmissions), it should be understood that example embodiments may be equally applicable to uplink transmissions (or alternatively downlink transmissions).

It will be appreciated that a number of example embodiments may be used in combination.

Cellular repeaters are widely used in wireless networks to provide coverage extension. In the downlink (from base station to UE), a repeater receives a signal from a nearby base station, amplifies and retransmits (or repeats) the signal to a UE. In the uplink (from UE to base station), the repeater receives a signal from a UE, amplifies and retransmits the signal to the base station.

Repeaters are relatively cost effective and have relatively small latency when compared with other coverage improvement solutions like Integrated Access and Backhaul (IAB).

Repeaters may be used in 5th Generation (5G) New Radio (NR) to improve wireless coverage. A 5G NR repeater is currently being standardized by the 3rd Generation Partnership Project (3GPP).

In order to provide coverage extension, a repeater has an internal gain that amplifies the input signal for retransmission at a higher power level. However, the internal gain of a repeater is limited by the isolation between the transmit antenna and the receive antenna of the repeater. And, a smaller internal gain results in smaller coverage area. In a co-channel repeater, for example, the output signal at the transmit antenna with power level Pt is picked up by the receive antenna with measured received power of Pr. The difference between the Pt and Pr is the isolation.

In a conventional repeater, positive feedback occurs in that the output signal from the transmit antenna, after attenuation by over-the-air propagation, is picked up by the receive antenna and passes through the repeater to be amplified again, creating an echo in the first loop (i.e., self-interference). Subsequently, the echo is picked up by the receive antenna to be amplify-forwarded again, creating another echo in the second loop, and so on.

The total amplitude of the combined input and echo signals increases after each loop, and higher internal gain leads to higher amplitude increases. When the accumulated power becomes high enough to saturate the power amplifier, the output signal is distorted by power amplifier (PA) nonlinearity. When the internal gain is higher than the isolation, repeater self-oscillation may occur and the repeater may become unstable. To avoid strong echoes, and for safe operation, the internal gain may be limited or constrained to between about 10 to 15 dB less than the isolation.

In another example, a conventional repeater assumes that the isolation is uniform in all spatial directions. In general, however, the isolation of the repeater is related to the relative geographical position (height, orientation, down tilt, etc.) between the fronthaul antenna and the access antenna at the repeater. Such physical constraints may not be easily resolvable due to the given deployment scenario (e.g., repeater placement location may not be ideal due to site availability, the direction of the donor cell and the boresight direction of the coverage area may not form a straight line, etc.). For example, in an urban canyon scenario, the placement of the access panel and the fronthaul panel may need to be adapted to fit the shape of the street and the directions of the UEs to be served.

5G NR smart repeaters with beamforming antennas enable a repeater to maximize the gain in the spatial direction of the UE through beam steering. However, beamforming at a repeater adds another dimension to the isolation issue mentioned above.

For example, for beamforming repeaters, since the relative position of the access beam and the fronthaul beam keeps changing due to steering, the isolation may be different in different spatial directions; that is, the isolation may be spatial direction dependent. In one example, the difference in isolation in different spatial directions may be more than 30 dB in urban canyon scenarios where reflection from walls, lampposts, or other street furniture, may alter the propagation path and affect (e.g., significantly affect) the self-interference level. However, in a conventional repeater with a fixed gain for all directions, the internal gain of the repeater is limited by the spatial direction with the least isolation. This may be suboptimal as it limits the smart repeater's coverage area.

At least one example embodiment provides mechanisms for measuring and/or estimating isolation between a fronthaul panel and an access panel at a beamforming repeater on a per-beam basis by leveraging the DL/UL switching gap in a time division duplex (TDD) system. According to one or more example embodiments, the beamforming repeater may measure the isolation during the DL-UL switching gap and/or the UL-DL switching gap.

One or more example embodiments provide mechanisms to inform a donor gNB of the isolation in each spatial direction (or beam) in the steering range (among a plurality of beams) of a beamforming repeater dynamically and/or more effectively manage or control an internal gain of the beamforming repeater (e.g., leverage the dynamic gain of the power amplifier (PA) inside the repeater) and/or avoid self-oscillation.

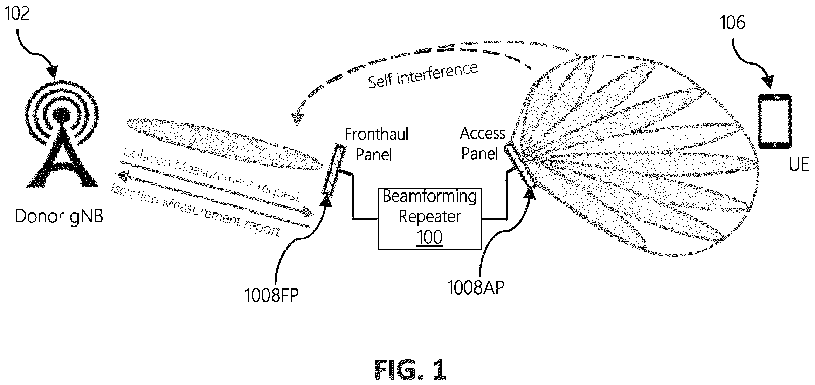

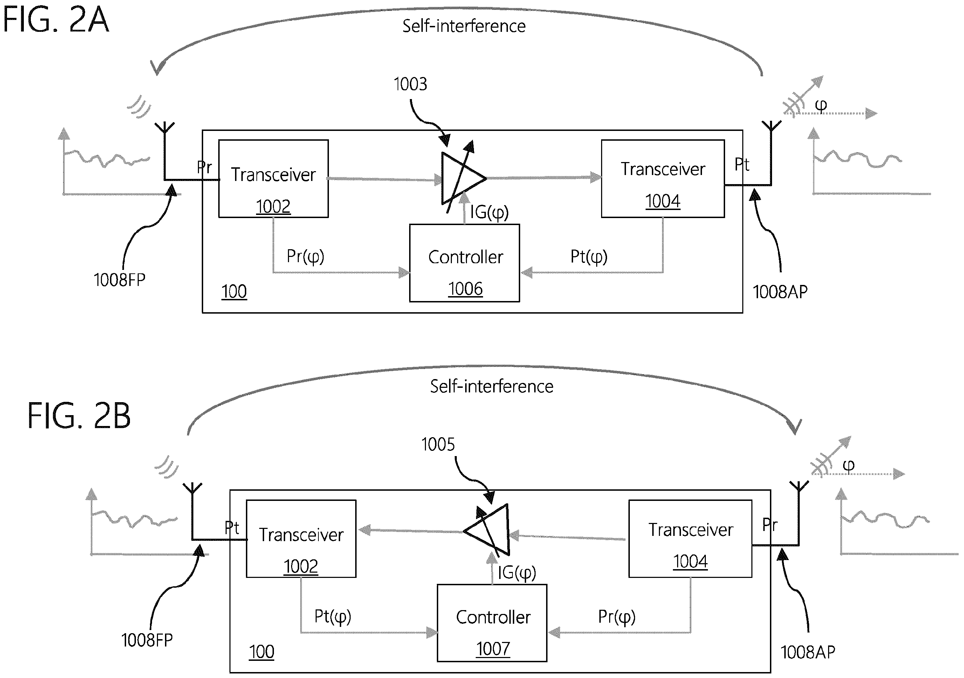

FIG. 1 is a block diagram illustrating an example embodiment of a beamforming repeater in communication with a donor gNB and a UE in the DL. The block diagram for the UL is the same except that the direction of the self-interference channel is from 1008FP to 1008AP, thus such illustration is omitted for the sake of brevity. FIG. 2A is a more detailed block diagram illustrating an example embodiment of the beamforming repeater 100 operating in the DL. FIG. 2B is a more detailed block diagram illustrating an example embodiment of the beamforming repeater 100 operating in the UL.

Referring to FIGS. 1, 2A and 2B, the beamforming repeater 100 includes a fronthaul panel 1008FP and an access panel 1008AP, each of which support beamforming. In this example, the fronthaul panel 1008FP is configured to communicate with a donor gNB 102 using a fixed beam on the fronthaul link. The access panel 1008AP is configured to communicate with one or more UEs (e.g., UE 106) using a steerable beam in its steering range on the access link.

In operation, self-interference arises at the beamforming repeater 100 when the signal transmitted on a transmit beam on the access link is picked up by the receive beam on the fronthaul link, and vice-versa. The level of self-interference observed by the fronthaul beam in the DL (or observed by the access beam in the UL) may depend on the spatial direction of the access beam. As a result, the isolation may be different in different spatial directions (for different access beams).

The beamforming repeater 100 further includes transceivers 1002 and 1004, which are coupled to a configurable gain control unit (e.g., an adjustable gain amplifier) 1003 and a controller 1006 in the DL (as shown in FIG. 2A), or to a configurable gain control unit 1005 and a controller 1007 in the UL (as shown in FIG. 2B). In the DL, transceiver 1002 serves as a receiver and transceiver 1004 serves as a transmitter. In the UL, transceiver 1004 serves as a receiver and transceiver 1002 serves as a transmitter. The configurable gain control units 1003 and 1005 may be implemented as single, or separate, hardware or software units, and thus, may share some or all hardware and/or software. Similarly, the controllers 1006 and 1007 may be implemented as single, or separate, hardware or software units, and thus, may share some or all hardware and/or software.

The transceiver 1002 is further coupled to the fronthaul panel 1008FP and the transceiver 1004 is further coupled to the access panel 1008AP. Each of the transceivers 1002 and 1004 may be implemented in analog circuitry, digital circuitry, or combinations of analog circuitry and digital circuitry. The transceivers 1002 and 1004 may include one or more appropriate connectors, attenuators, combiners, splitters, amplifiers, filters, duplexers, analog-to-digital converters, digital-to-analog converters, electrical-to-optical converters, optical-to-electrical converters, mixers, fieldprogrammable gate arrays (FPGAs), microprocessors, transceivers, framers, etc., to process signals received via the respective panels for amplification by the configurable gain control unit 1003/1005 and/or transmission on the DL or DL.

The transceivers 1002 and 1004 may also be configured to apply the spatial direction dependent transmit and/or receive power for a given beam pointing in an azimuth direction φ, and to output this spatial direction dependent power information to the controller 1006/1007.

In FIG. 2A, in the DL, the transceiver 1002 operates as a receiver and the transceiver 1004 operates as a transmitter. The transceiver 1002 outputs receive power Pr(φ) (at the fronthaul panel 1008FP) for (self-interference) signals transmitted from the access panel 1008AP on the transmit beam pointing to azimuth direction φ. The transceiver 1004 outputs the transmit power Pt(φ) for the transmit beam pointing to azimuth direction φ. As discussed in more detail later, the controller 1006 may compute an isolation measurement (or estimate) for the beam pointing to azimuth direction φ based on the receive power Pr(φ) and the transmit power Pt(φ) in the DL. The controller 1006 may also adjust the gain IG(φ) of the configurable gain control unit 1003 for a given azimuth (spatial) direction φ via a gain adjustment signal.

In FIG. 2B, in the UL direction the transceiver 1004 operates as a receiver and the transceiver 1002 operates as a transmitter. The transceiver 1004 outputs receive power Pr(φ) (at the access panel 1008AP) for (self-interference) signals transmitted from the fronthaul panel 1008FP and received at the receive beam pointing to azimuth direction φ. The transceiver 1002 outputs the transmit power Pt(φ) for the transmit beam pointing in a fixed direction. As discussed in more detail later, the controller 1007 may compute an isolation measurement (or estimate) for the beam pointing to azimuth direction φ based on the receive power Pr(φ) and the transmit power Pt(φ) in the UL. The controller 1007 may also adjust the gain IG(φ) of the configurable gain control unit 1005 for a given azimuth (spatial) direction φ via a gain adjustment signal.

According to one or more example embodiments, the beamforming repeater 100 and the donor gNB 102 communicate via an established control (or configuration) channel. In at least one example embodiment, the beamforming repeater 100 sends its beamforming capability to the donor gNB 102 via the control channel. The beamforming capability may include parameters such as the number of antenna panels, maximum Effective Isotropic Radiated Power (EIRP), the steering range in azimuth and elevation directions, etc.

Other communication between the donor gNB 102 and the beamforming repeater 100, including gain control adjustments, isolation measurement requests and/or reporting, control of beam steering of the beamforming repeater access link towards the UE 106, etc., may be carried out via the control channel.

According to one or more example embodiments, the beamforming repeater 100 has knowledge of the TDD pattern (either by observation or through the configuration channel), wherein the beamforming repeater 100 knows the starting sample index and ending sample index of the NR physical channel.

According to one or more example embodiments, the donor gNB 102 is configured to instruct the beamforming repeater 100 (e.g., via the control channel) to perform isolation measurements between the steerable beam on the access link and the fixed beam on the fronthaul link, for a plurality of spatial directions (on a per-beam basis). The spatial directions may be represented in a certain granularity (e.g., every 5 degrees across the steering range of the access panel 1008AP). The beamforming repeater 100 may report the isolation values across the steering range to the donor gNB 102 in the form of an isolation mask. According to one or more example embodiments, the beamforming repeater 100 may perform the isolation measurement periodically, semi-persistently, or aperiodically, to measure and track isolation changes in one or more spatial directions. The change in isolation may be caused by beam direction change such as beam refinement or beam codebook updates as triggered by the donor gNB 102 and/or by beam propagation path changes as a result of blockage or reflection from temporal events like moving trucks, foliage, billboards, etc.

The donor gNB 102 communicates with the UE 106 through the fronthaul beam and the access beam of the beamforming repeater 100. With knowledge of spatial direction dependent isolation values, the donor gNB 102 may configure, via the control channel, the internal gain at the beamforming repeater 100 more optimally in the direction of the UE 106 to improve signal quality and/or coverage within an isolation constraint in the same direction. In directions with higher isolation, higher internal gain may be applied which translates into higher signal-to-noise ratio (SNR) and/or longer coverage range. As a result, the access side of the beamforming repeater 100 may exhibit a non-symmetrical or non-uniform coverage pattern as shown in FIG. 1 (dashed line envelope). According to one or more example embodiments, the donor gNB 102 may better leverage the dynamic range of the power amplification at the beamforming repeater 100 in the direction of the UEs it serves with less risk of oscillation.

FIG. 1 shows a typical deployment scenario of a beamforming repeater where the donor gNB and the beamforming repeater are stationary, but the UE is in motion. However, example embodiments should not be limited to this example. Rather, example embodiments may applicable to other variations of the scenario. In one example, the beamforming repeater may be a vehicle-mounted repeater, either on the roof or inside the vehicle (e.g., car, bus, train, etc.), where the beamforming repeater and the in-vehicle UE are stationary with respect to each other, but they are in motion with respect to the donor gNB. In another example, the beamforming repeater may be an airborne repeater, where both the beamforming repeater and the UE are in motion with different characteristics and the donor gNB is stationary. In yet another example, the beamforming repeater may be an airborne repeater, where both the beamforming repeater and the UE are in motion with different characteristics and the donor gNB is airborne or in-orbit with a defined motion trajectory known to the beamforming repeater. Finally, another example embodiment is a ground beamforming repeater connected with an airborne or in-orbit donor gNB to serve UEs either stationary or in motion.

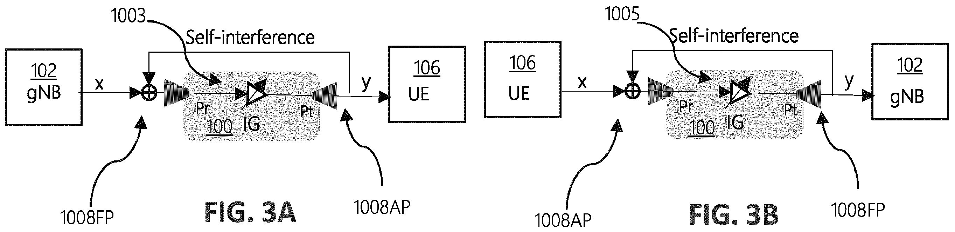

FIG. 3A is a functional block diagram illustrating self-interference during the DL-UL switching gap, according to example embodiments. FIG. 3B is a functional block diagram illustrating self-interference during the UL-DL switching gap, according to example embodiments.

As shown in FIGS. 3A and 3B, the configurable gain control units 1003 and 1005 respectively, represent the adjustable internal gain IG to be applied to the receive signal of power Pr to generate the transmit signal of power Pt fed to the transmit antenna (access panel 1008AP in FIG. 3A and the fronthaul panel 1008FP in FIG. 3B).

As discussed in more detail later, according to one or more example embodiments, 5G NR downlink signals are used for isolation measurement in the DL-UL switching gap (FIG. 3A), where x represents the signal from the donor gNB 102, Pr is the receive signal power from the fronthaul panel 1008FP, Pt is the transmit power fed to the access panel 1008AP, and y represents the forwarded signal (including the directional gain of the access panel beamforming) to UE 106.

5G NR uplink signals may also be used for isolation measurement in the UL-DL switching gap (FIG. 3B), where x represents the signal from the UE 106, Pr is the receive signal power from the access panel 1008AP, Pt is the transmit power fed to the fronthaul panel 1008FP, and y is the forwarded signal (including the directional gain of the fronthaul panel beamforming) to the donor gNB 102.

For any given pair of beams (i.e., one beam from the access panel 1008AP and the other beam from the fronthaul panel, in the DL the configurable gain control unit 1003 amplifies the receive signal of power Pr by the internal gain IG to obtain the transmitted signal of power Pt. Isolation IS represents the attenuation experienced by the self-interference signal from the transmit antenna (access panel 1008AP) to the receive antenna (fronthaul panel 1008FP) of the beamforming repeater 100. A delay D is an internal delay introduced by the processing chain at the beamforming repeater 100. In more detail, the internal delay D is the time difference between the detected wavefront at the output of the receiving antenna panel (e.g., fronthaul panel 1008FP for DL transmissions and access panel 1008AP for UL transmission) and at the input of the transmitting antenna panel inside the beamforming repeater 100. According to one or more example embodiments, variation of repeater internal delay over different samples from the same beamforming repeater product line may be negligible, and thus, rather than determining the internal delay D for each and every repeater unit, the beamforming repeater 100 may utilize a value determined based on empirical evidence, testing and/or calibration as the internal delay D. Thus, the internal delay D is assumed to be known at the beamforming repeater 100. The internal gain IG is also assumed to be known at the beamforming repeater 100.

The beamforming repeater 100 may measure and/or estimate the isolation IS since the isolation depends on the actual deployment scenario.

Example embodiments provide several methods for measuring isolation using sampling intervals from the beginning and/or the end of the transmitted signal under various multipath delay spread settings.

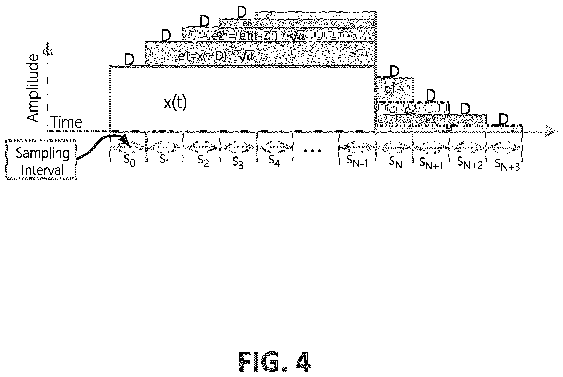

For simplicity, an example for estimating isolation IS at the beamforming repeater 100 in an ideal setup without multipath delay spread is provided first, and then example embodiments demonstrating how methods may also be used to estimate isolation IS under various multipath delay spread scenarios are presented later. A time domain representation of the incoming signal and its first few echoes (i.e., self-interference) observed at the receiving antenna (e.g., fronthaul panel 1008FP for DL transmissions or access panel 1008AP for UL transmissions) is illustrated in FIG. 4.

As shown, the incoming signal x(t) is amplified by the internal gain IG at the configurable gain control unit 1003/ 1005 after experiencing a delay of D. The delayed and amplified signal is picked up by the beamforming repeater 100 again after going through the self-interference channel with loss characterized by the isolation IS. Therefore, the first order echo (i.e., self-interference signal) may be written as shown below in (1).

$$e_1(t) = x(t - D) * \sqrt{IG} \div \sqrt{IS} = x(t - D) * \sqrt{a} \qquad (1)$$

In (1), $a \equiv \frac{IG}{IS}$ , 0< a < 1, is the ratio between the internal gain IG and the isolation IS on a linear scale. If the power of x(t) is assumed to be $P_x$, then the power $P_{e,1}$ of the first echo $e_1(t)$ is given by (2) shown below.

$$P_{e,1} = a * P_x \qquad (2)$$

This first order echo is re-amplified by the internal gain IG at the configurable gain control unit 1003/ 1005 after experiencing another delay D, and then picked up by the beamforming repeater 100 again as the second order echo $e_2(t)$ given by (3) shown below.

$$e_2(t) = e_1(t - D) * \sqrt{a} = x(t - 2D) * a \qquad (3)$$

In this case, the power $P_{e,2}$ of the second order echo $e_2(t)$ is given by (4) shown below.

$$P_{e,2} = a * P_{e,1} = a^2 * P_x \qquad (4)$$

For integer k ≥ 1, the power $P_{e,k}$ of the k-th order echo $e_k(t)$ is therefore given by (5) shown below.

$$P_{e,k} = a * P_{e,k-1} = a^k * P_x, \quad k = 1,2,3,\ldots \quad . \qquad (5)$$

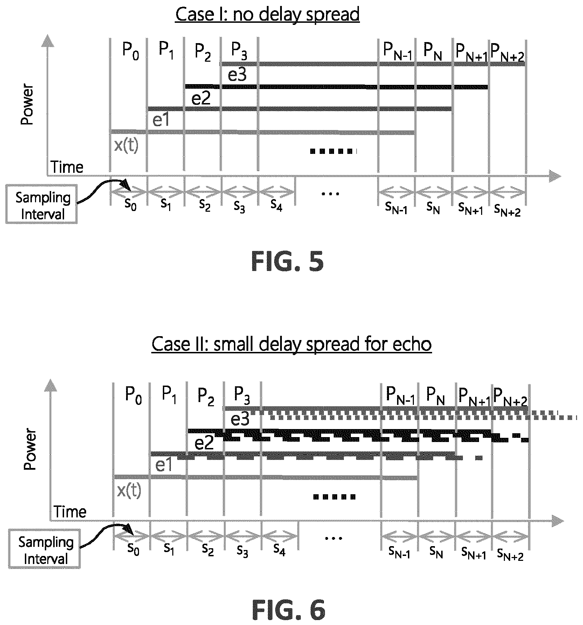

Consequently, the measured receive signal power at the first few sampling intervals, as illustrated in FIG. 5, can be written as shown below in (6), (7), (8) and (9).

$$P_0 = P_x, \qquad (6)$$

$$P_1 = P_x + P_{e,1} = (1 + a) * P_x, \qquad (7)$$

$$P_2 = P_x + P_{e,1} + P_{e,2} = (1 + a + a^2) * P_x, \qquad (8)$$

$$P_k = P_x + P_{e,1} + \cdots + P_{e,k} = \left(1 + a + \cdots + a^k\right) * P_x = \frac{\left(1 - a^{k+1}\right)P_x}{1 - a}, \quad k = 1,\ldots,N - 1. \qquad (9)$$

It is noted that the underlying assumption for (6) to (9) is that the original signal and its echoes may experience various delay (in addition to the intrinsic delay D) and/or phase shift in the self-interference channel, and thus, the combined signal may have constructive and/or destructive combining at various frequencies (sub-carrier level or narrower). The average power may therefore be equivalent to the sum of the power of the original signals and its various echoes.

The beamforming repeater 100 (e.g., via the controller 1006/1007) may estimate $a \equiv \dfrac{IG}{IS}$ from at least two power measurements from $[P_0, P_1, P_2, \ldots]$. Once $a$ is obtained, the beamforming repeater 100 may estimate (or measure) the isolation IS as $IS = \dfrac{IG}{a}$ (e.g., for a given directional beam pair). As discussed herein, '$a$' may be referred to as an isolation measurement parameter.

According to one or more example embodiments, the beamforming repeater 100 may also estimate $a$ from power measurements from the ending section of the desired signal.

Without loss of generality, assuming sampling interval $S_{N-1}$ is the last period of length D where the desired signal x(t) ends, since this period contains the desired signal x(t) as well as its various order echoes, the measured receive signal power $P_{N-1}$ for interval $S_{N-1}$ is given by (10) shown below.

$$P_{N-1} = P_x + P_{e,1} + P_{e,2} + P_{e,3} + \cdots = (1 + a + a^2 + a^3 + \cdots) * P_x \simeq \frac{P_x}{1-a}. \qquad (10)$$

For the next sampling interval $S_N$, the original signal x(t) ends, but all echoes remain. Hence, the measured receive signal power $P_N$ for interval $S_N$ is given by (11) shown below.

$$P_N = P_{e,1} + P_{e,2} + P_{e,3} + \cdots = (a + a^2 + a^3 + \cdots) * P_x = \frac{a * P_x}{1-a}. \qquad (11)$$

For sampling interval $S_{N+1}$, the first echo also ends, and thus, the measured receive signal power $P_{N+1}$ for interval $S_{N+1}$ is given by (12) shown below.

$$P_{N+1} = P_{e,2} + P_{e,3} + \cdots = (a^2 + a^3 + \cdots) * P_x = \frac{a^2 * P_x}{1-a}. \qquad (12)$$

Comparing (10), (11) and (12), the beamforming repeater 100 may obtain an estimate of $a \equiv \frac{IG}{IS}$ from at least two power measurements of the ending section of the transmission. As noted similarly above, once $a$ is obtained, the beamforming repeater 100 may estimate (or measure) the isolation IS as $IS = \frac{IG}{a}$.

As the successive feedback loop continues, the higher order echoes may fade below noise level if the margin between internal gain IG and isolation IS is relatively large. For example, if the internal gain IG is 5 dB less than the isolation IS, then the power of the self-interference signal will be attenuated by 5 dB after each feedback loop, and will be 20 dB weaker than the desired signal after four iterations. Therefore, one or more example embodiments may utilize measured power samples with higher signal power to reduce the impact of noise.

In an example of an actual deployment scenario, the desired signal may have relatively small scale variations introduced by the channel or its modulated signals and waveforms, in addition to impairment caused by noise. For a sampling interval of length D, which equals the intrinsic delay of analog repeaters (e.g., around 100 ns), multiple power measurement samples may be obtained. Accordingly, the beamforming repeater 100, according to one or more example embodiments, may utilize the average power over multiple power samples from each sampling interval to estimate the isolation.

In another example embodiment, the delay spread of the incoming signal is negligible and the delay spread of the self-interference channel is notable but smaller than D.

For example, as illustrated in FIG. 6, the first order echo $e_1(t)$ contains multiple delayed versions of the signal $x(t - D)$ spanning over (D, D+T) where T is the delay spread of the self-interference channel. The second order echo $e_2(t)$ contains multiple delayed versions of $e_1(t - D)$ spanning over (2D, 2D+2T). Without loss of generality, the average received signal power $P_{N-1}$ during sampling interval $S_{N-1}$ may be represented, following (10), as shown below in (13).

$$P_{N-1} \simeq \frac{P_s}{1-a} \qquad (13)$$

In (13), $P_s > 0$ is a positive constant (an auxiliary variable) and $a \equiv \frac{IG}{IS}$, $0 < a < 1$, is the isolation measurement parameter to be estimated. Similarly, the average received power $P_N$ and $P_{N+1}$ during sampling intervals $S_N$ and $S_{N+1}$, respectively, is given as shown below in (14).

$$P_N = \frac{a * P_s}{1-a}, \qquad P_{N+1} = \frac{a^2 * P_s}{1-a} + \varepsilon \qquad (14)$$

In (14), $\varepsilon > 0$ represents the residual power from the first order echo $e_1(t)$ extended to the interval $S_{N+1}$. The beamforming repeater 100 may compare at least two average power measurements from (13) and (14) to obtain an estimate of the isolation measurement parameter $a$, and then compute an estimate of the isolation $IS = \frac{IG}{a}$.

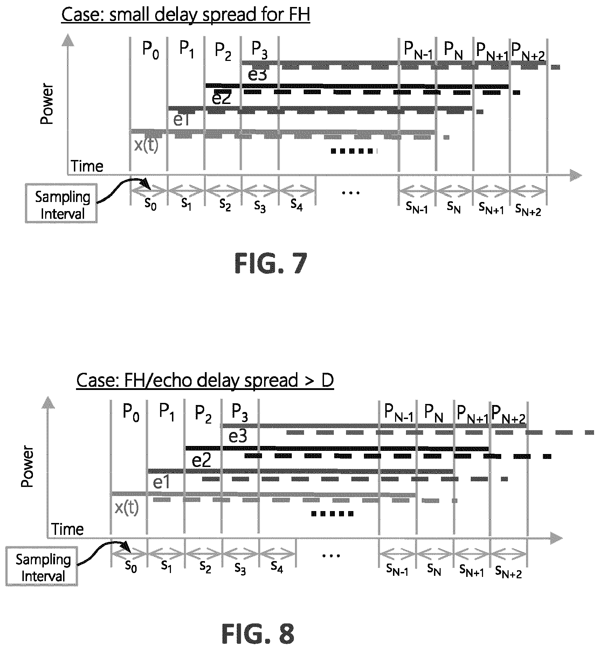

In yet another example embodiment, the delay spread of the self-interference channel is negligible and the delay spread of the incoming signal is notable but smaller than D. For example, as illustrated in FIG. 7, the incoming signal $x(t)$ and its multipath copies spanning over (0, T) are picked up by subsequent echoes. Without loss of generality, the average received signal power $P_{N-1}$ during sampling interval $S_{N-1}$ is, following (10) and (13), given by (15) shown below.

$$P_{N-1} \simeq \frac{P_b}{1-a} \qquad (15)$$

In (15), $P_b > 0$ is a positive constant (an auxiliary variable). Similarly, the average receive power $P_N$ and $P_{N+1}$ during sampling intervals $S_N$ and $S_{N+1}$, respectively, are given as shown below in (16).

$$P_N = \frac{a*P_b}{1-a} + \delta, \qquad P_{N+1} = \frac{a^2*P_b}{1-a} + a*\delta, \qquad (16)$$

In (16), $\delta > 0$ represents the residual power from multipaths of the incoming signal extended to interval $S_N$. In this example, the beamforming repeater 100 may compare at least two average power measurements from (15) and (16) to obtain an estimate of the isolation measurement parameter $a$, and then compute the estimated isolation $IS = \frac{IG}{a}$.

In yet another example embodiment, a relatively large delay spread (e.g., T > D) exists in either or both the self-interference and incoming signal channels. For example, as illustrated in FIG. 8, the incoming signal $x(t)$ and its multipath copies are picked up by subsequent echoes with extra delay spread introduced by the self-interference channel. Without loss of generality, in this example, the average received signal power $P_{N-1}$ during sampling interval $S_{N-1}$ is represented, following (10), (13) and (15), as shown below in (17).

$$P_{N-1} \simeq \frac{P_c}{1-a} \qquad (17)$$

In (17), $P_b > 0$ is a positive constant (an auxiliary variable). Similarly, the average receive power $P_N$ and $P_{N+1}$ during sampling intervals $S_N$ and $S_{N+1}$, respectively, may be given as shown below in (18).

$$P_N = \frac{a*P_c}{1-a} + \mu, \qquad P_{N+1} = \frac{a^2*P_c}{1-a} + a*\mu + v, \quad (18)$$

In (17), $\mu > 0$ represents the residual power from multipaths of the incoming signal extended to interval $S_N$, and $v > 0$ represents the residual power from multipaths of the first order echo as well as the incoming signal extended to interval $S_{N+1}$. The beamforming repeater 100 may compare at least two average power measurements from (17) and (18) to generate an estimate of the isolation measurement parameter $a$, and then estimate (or compute) the isolation $IS = \frac{IG}{a}$.

In another example embodiment, the impact of residual signal at the end of the signal envelope may not be negligible. Such residual signals, which may be caused by filter/PA memory at the donor gNB 102 or UE 106, may introduce a relatively smooth drop of power, instead of an ideal step function, at the end of transmission. Moreover, such residual signals may be treated the same or substantially the same way as multipath components in the example embodiments where delay spread of the incoming signal is notable (e.g., as shown in FIGS. 7 and 8).

According to one or more example embodiments, a more accurate isolation estimate may be generated from multiple noisy estimates. For example, isolation measurements $IS_1$, $IS_2$, $IS_3$ may be assumed to be three independent isolation measurements for a given fronthaul-access beam pair, and $IS_0 = \frac{(IS_1+IS_2+IS_3)}{3}$ may be used as the final estimate of the isolation. In another example, the final estimate $IS_0$ may be derived by computing a weighted sum of the existing independent estimates, where the weights may be determined based on the quality (e.g., SNR or variation of power samples) of existing estimates.

For the same transmit-receive beam pair, the isolation in the DL is identical to the isolation in the UL due to channel reciprocity.

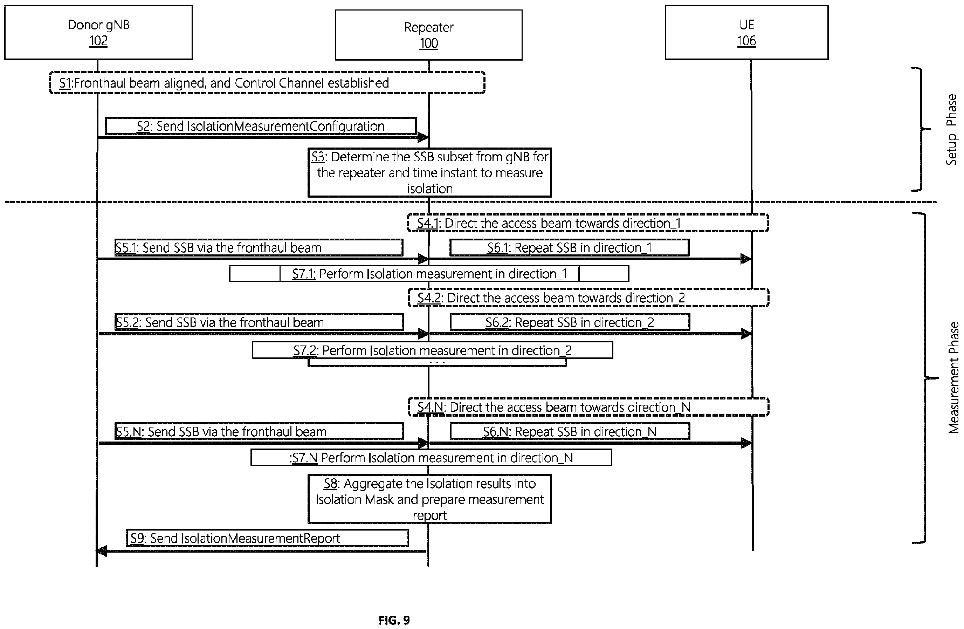

FIG. 9 is a signal flow diagram illustrating an example embodiment of a method for periodic isolation estimation based on SSB signals.

In the case of periodic isolation measurement reporting, the beamforming repeater 100 generates spatially dependent isolation measurement information and sends an isolation measurement report message IsolationMeasurementReport to the donor gNB 102 periodically according to one or more isolation measurement profiles as defined in the isolation measurement configuration message IsolationMeasurementConfiguration received from the donor gNB 102.

The beamforming repeater 100 may perform the isolation measurement for each spatial direction using NR physical channels. For example, as an SSB signal in NR is periodic, the beamforming repeater 100 may use the SSB signal received at the fronthaul panel beam and sent (or repeated) out through the access panel beam to one or more spatial directions to measure the isolation. The beamforming repeater 100 may iterate through all spatial directions in the steering range according to the specified granularity or beam sets at the access panel 1008AP. The beamforming repeater 100 collects all isolation measurements in the form of an isolation mask, and sends the isolation mask to the donor gNB 102 in an isolation measurement reporting message IsolationMeasurementReport.

For periodic estimation, SSB signals may be used for isolation measurement as the SSB burst is periodic and there will be relatively strong SSB signals from the donor gNB 102 that are directed towards the beamforming repeater 100 via the fronthaul panel beam and repeated by the access panel beam. If the beamforming scheme on the access link of the beamforming repeater 100 is a grid of beams (GoB), then measuring the isolation across all the SSB directions on the access link may be sufficient. If a more advanced beamforming scheme (e.g., Eigen beamforming (EBF)) is used where the potential beam directions are more than the SSB beam grid, then the beamforming repeater 100 may use one SSB, out of the dedicated SSB set from the donor gNB 102, to sweep through the required spatial directions according to the measurement configuration.

Referring in more detail to FIG. 9, at S1 the beamforming repeater 100 aligns the fronthaul beam and establishes a control channel with the donor gNB 102 in any suitable known manner.

At S2, the donor gNB 102 sends the isolation measurement configuration message IsolationMeasurement-Configuration to the beamforming repeater 100 requesting spatially dependent isolation measurement information (also referred to herein as spatial direction dependent isolation measurement information or spatial direction dependent isolation measurements) for one or more directional beams (spatial directions or beams) at the access panel 1008AP. In this example, the isolation measurement configuration message IsolationMeasurementConfiguration requests that the beamforming repeater 100 provide the spatially dependent isolation measurement information on a periodic basis. However, as mentioned above, the spatially dependent isolation measurement information may be provided on a semi-persistent basis, an aperiodic basis and/or be event based.

The isolation measurement configuration message IsolationMeasurementConfiguration may define one or more sets of measurement profiles. A measurement profile may include a measurement object, a measurement report configuration, measurement identity information and/or quantity configurations.

The measurement object may be the NR physical channels (also referred to herein as NR physical channel signals) to be reused for isolation measurement (e.g., SSB channels, channel state information reference signal (CSI-RS) channels, PxSCH (PDSCH or PUSCH) channels, etc.). The SSB channels, the CSI-RS channels and the PxSCH channels may be more generally referred to as isolation measurement signals. The measurement object may also include a donor gNB identifier (donor gNB_ID) a repeater identifier (ID) identifying the beamforming repeater 100, a bandwidth part (BWP) identifying the BWP to perform the isolation measurement, and/or one or more beam identifiers (Beam_ID) that identifies the spatial directions represented as a set of beams.

The measurement report configuration may indicate whether the reporting of the isolation measurement to the donor gNB 102 should be, for example, periodic or event based (e.g., where the isolation measurement is reported when the isolation changes by a given threshold), the time stamp for the measurement information, and/or a reporting format indicating the format of the isolation measurement report.

If the isolation measurement reporting is to be periodic, then the measurement report configuration may also provide a periodicity for the isolation measurement reporting. If the isolation measurement reporting is to be event based, then the measurement report configuration may include the threshold change mentioned above.

The time of measurement information may include time offsets (indicating a slot or symbol time for the start of a measurement object), duration (the length of the measurement object in symbols/slots) and/or periodicity information (a frequency of the measurement object).

The periodicity of the isolation measurement and reporting may be based on the NR physical channels. For example, SSB channels are transmitted by the donor gNB every 20 ms, and thus, the periodicity of the isolation measurement at the beamforming repeater may be 20 ms. The periodicity of the measurement reporting may be a multiple of the periodicity of the isolation measurement. For example, if the beamforming repeater has 10 directional beams, then the periodicity of the measurement reporting is 200ms (10 x 20 ms).

In an example in which the donor gNB dedicates more than one SSB channel in the direction of the beamforming repeater, then the beamforming repeater may receive more than one SSB channel every 20 ms, and perform that number of isolation measurements (one for each different spatial direction) every 20 ms, which may provide for more frequency measurement reports. In a more specific example, if the donor gNB dedicates 2 SSB channels in the direction of the beamforming repeater, then the beamforming repeater may receive 2 SSB channels every 20 ms, and perform 2 isolation measurements every 20 ms. In this case, if the beamforming repeater has 10 directional beams, then the periodicity of the measurement reports is 100ms (5 x 20ms). It should be noted that these are only examples, and example embodiments should not be limited to only the examples discussed herein.

The format of the isolation measurement report may indicate the spatial granularity (e.g., in degrees) for the beams and/or an isolation granularity (e.g., in dB).

The measurement identity information may identify the one or more measurement profiles created in response to the isolation measurement configuration message IsolationMeasurementConfiguration.

According to one or more example embodiments, the beamforming repeater 100 may establish one or more measurement profiles according to the isolation measurement configuration message IsolationMeasurementConfiguration. Moreover, the beamforming repeater 100 may remove existing measurement profiles, and add new measurement profiles through the use of the isolation measurement configuration messages.

The quantity configuration information may establish and set layer 3 (L3) filtering of the isolation measurements.

An example isolation measurement configuration message IsolationMeasurementConfiguration for subband repetition is shown below.

> *REPEATER-SUBBAND-REPETITION-CONFIGURATION-MESSAGE*
>  *Donor gNB ID*
>  *Repeater ID*
>  *BWP ID*
>  *Number of Subband Repetition commands*
>   *Subband Repetition command 1*
>    *Direction =*
>  *Enumerated { Downlink (input - fronthaul link, output - access link), Uplink*
> *(Input - access link, output - fronthaul link) }*
>    *Activation Time =*
>     *Symbol Index in the radio frame*
>    *Activation Duration =*
>     *Number of symbols*
>    *Incoming subband info*
>    *Bandwidth =*
>     *Number of PRBs*
>    *Frequency offset =*
>     *Subcarrier index*
>    *Outgoing subband info*
>    *Frequency shift factor =*
>     *Signed number of subcarriers*
>    *Spectral inversion =*
>     *Enumerated { Enable, Disable }*
>
>    *Subband Repetition command 2*
>     *...*

Returning to FIG. 9, at S3 the beamforming repeater 100 determines the isolation measurement parameters for the isolation measurements from the isolation measurement configuration message IsolationMeasurementConfiguration. In one example, the beamforming repeater 100 extracts the SSB subset (measurement object), time instant to measure the isolation, etc., from the measurement profile defined according to the isolation measurement configuration message IsolationMeasurementConfiguration.

At S4.1, the beamforming repeater 100 directs the access panel beam towards a first direction direction_1 (first beam) from among the plurality of spatial directions within the steering range of the beamforming repeater 100.

At S5.1, the donor gNB 102 sends the SSB signal (also referred more generally as an isolation measurement signal) to the beamforming repeater 100 via the fronthaul panel 1008FP, and at S6.1 the beamforming repeater 100 repeats the SSB signal by transmitting the SSB signal via the access panel 1008AP in the first direction direction_1.

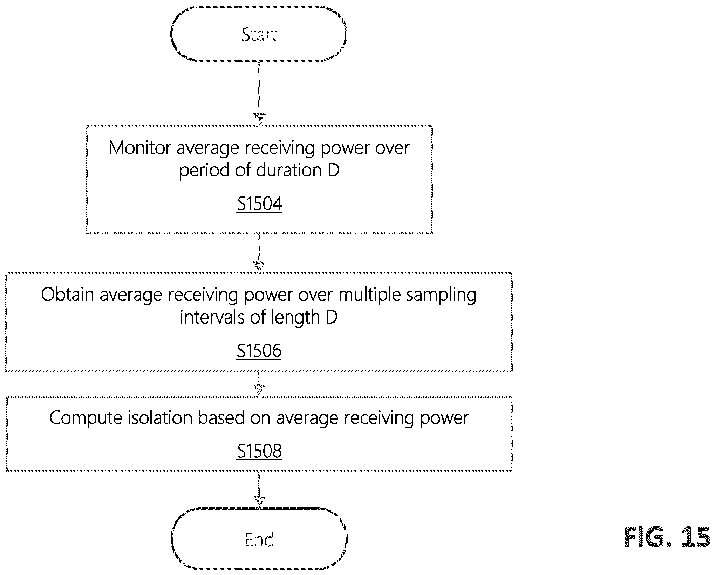

At S7.1, the beamforming repeater 100 performs an isolation measurement for the first direction direction_1. The measured isolation may then be stored in a buffer or memory at the beamforming repeater 100. A method for measuring isolation for the spatial direction (or beam) will be discussed below with regard to FIG. 15.

FIG. 15 is a flow chart illustrating a method for isolation measurement for a beam, according to example embodiments.

Referring to FIG. 15, at S1504 the beamforming repeater 100 monitors its average receive power over a measurement interval equal to the internal delay **D**. In one example, the beamforming repeater 100 may collect multiple time domain samples during the measurement interval. In one example, for a sample of length **Ts,** the beamforming repeater may obtain at least **D/Ts** samples during the measurement interval. The average power over **D/Ts** samples during the measurement interval represents the receive power during the measurement interval to reduce small scale power variation over the samples. According to one or more example embodiments, averaging over the measurement (or sampling) interval may be carried out by filtering, for example.

At S1506, the beamforming repeater 100 obtains the average receive power over multiple measurement intervals, each having a length equal to the internal delay **D.** As noted above, the beamforming repeater 100 may collect these average receive power measurements from the first few (e.g., 1, 2, 3, ..., M) measurement intervals of a data segment (e.g., the signal between a UL-DL switching gap and a DL-UL switching gap), the last few intervals of the data segment, or a combination of both.

The receiving end (e.g., fronthaul panel 1008FP and transceiver 1002 for DL transmissions or access panel 1008AP and transceiver 1004 for UL transmissions) at the beamforming repeater 100 may monitor the start of a wavefront and trigger data collection when the signal power increase exceeds a threshold. With regard to FIG. 4, for example, the beamforming repeater 100 may trigger data collection between $S_0$ and $S_1$, or between $S_1$ and $S_2$. The beamforming repeater 100 may also monitor the end of the wavefront and perform data collection when the signal power drop exceeds a threshold (e.g., between $S_{N-1}$ and $S_N$ or between $S_N$ and $S_{N+1}$ in FIG. 4).

At S1508, the beamforming repeater 100 computes and/or derives the isolation measurement for the spatial direction direction_1 based on the average power measurements. In one example, as discussed above with regard to (6)-(9) and (10)-(12), the beamforming repeater 100 obtains the isolation measurement parameter *a* based on the at least two average power measurements, and then computes the isolation IS based on the isolation measurement parameter *a* and the known internal gain IG ($IS = \frac{IG}{a}$). Isolation estimates based on measurements from the end of the data segment, such as shown in (10) and (11) discussed above, may be more accurate than estimates based on measurements from the beginning of the data segment, such as in (6) and (7) discussed above.

As discussed above, the beamforming repeater 100 may obtain multiple estimates of the isolation IS for a given beam pair by comparing power measurements from multiple sampling periods, and compute the estimated isolation $IS_0$ by averaging over independent isolation measurements or estimates $\left(IS_0 = \frac{(IS_1 + IS_2 + IS_3)}{3}\right)$. By generating multiple estimates of the isolation for each desired beam direction according to the process discussed above, and averaging the multiple estimates, the beamforming repeater 100 may obtain a more reliable isolation measurement for a given beam (or spatial) direction.

According to one or more example embodiments, the measurement method discussed herein may be used in both the DL and the UL- to be performed during the DL-to-UL gap (using a DL signal) or the UL-to-DL gap (using an UL signal).

Returning to FIG. 9, at S4.2, the beamforming repeater 100 directs the access panel beam towards a second direction direction_2 from among the plurality of spatial directions.

At S5.2, the donor gNB 102 sends a SSB signal to the beamforming repeater 100 via the fronthaul panel 1008FP, and at S6.2 the beamforming repeater 100 repeats the SSB signal by transmitting the SSB signal via the access panel 1008AP in the second direction direction_2.

At S7.2, the beamforming repeater 100 performs an isolation measurement for the second direction direction_2 in the same or substantially the same manner as discussed above with regard to S7.1. The beamforming repeater 100 then stores the isolation for the second direction direction_2 in the buffer or memory.

The beamforming repeater 100 repeats the process noted above with regard to S4.2, S5.2, S6.2 and S7.2 sequentially for each of the N directions in the steering range of the access panel 1008AP with S4.N, S5.N, S6.N and S7.N, which respectively correspond to S4.2, S5.2, S6.2 and S7.2, being performed for the $N^{th}$ direction direction_N. Each of the N isolation estimates are stored in the buffer or memory at the beamforming repeater 100.

At S8, the beamforming repeater 100 aggregates the N isolation measurements into an isolation mask, and generates an isolation measurement report message IsolationMeasurementReport for transmission to the donor gNB 102.

At S9, the beamforming repeater 100 sends the isolation measurement report message IsolationMeasurementReport to the donor gNB 102 via the control channel.

An example isolation measurement report message IsolationMeasurementReport is shown below.

*REPEATER-ISOLATION-MEASUREMENT-REPORT-MESSAGE*
> *Donor gNB ID*
> *Repeater ID*
> *BWP ID*
> *Antenna ID*
>> *Enumerated (Access Antenna; Fronthaul Antenna}*
> *Isolation Measurement Result*
>> *AzimuthIsolationReport*
>>> - *If present, this parameter specifies the max isolation pattern in any direction in the azimuthal plane of the array antenna. The pattern shall cover e.g. every degree within the full steering range in the azimuth direction.*

>> *ElevationIsolationReport*
>>> - *If present, this parameter specifies the max isolation pattern in any direction in the elevation plane of the array antenna. The pattern shall cover e.g. every degree within the full steering range in the elevation direction.*

>> *TwoDimensionIsolationReport*
>>> - *If present, this parameter specifies the max isolation pattern in both azimuthal and elevation directions. The pattern shall include a granularity for e.g. every 5 degrees for the azimuth angle, every one degree for the elevation angle.*

In this example, the isolation measurement report message IsolationMeasurementReport includes identification information for the donor gNB, beamforming repeater, BWP and antenna, as well as isolation measurement information in the azimuth and/or elevation with a certain granularity within the steering range.

According to one or more example embodiments, the isolation measurement at the beamforming repeater 100 may also be aperiodic. Aperiodic isolation estimation may be triggered semi-persistently and/or be event-based, and may last for a number of measurement occasions.

The donor gNB 102 may trigger an aperiodic isolation measurement to obtain an instant and/or current isolation measurement by sending an isolation measurement request message IsolationMeasurementRequest to the beamforming repeater 100. In one example, the donor gNB 102 determines the best access beam that the beamforming repeater 100 may use in the direction of the UE 106, and identifies this beam by a Beam_ID, which represents the best set of complex weights for transmission to the UE 106 from the access panel 1008AP.

The donor gNB 102 may request an aperiodic isolation estimate from the beamforming repeater 100 at the same or substantially the same time as when the donor gNB 102 communicates with the UE 106 through NR physical channels, such as the PDSCH or PUSCH. For example, the donor gNB 102 may schedule a PDSCH transmission to the UE 106 in a special slot, and also inform the beamforming repeater 100 beforehand to obtain the isolation measurement during the same special slot for the PDSCH (or PUSCH) transmission in the direction of the UE 106 (or the donor gNB 102).

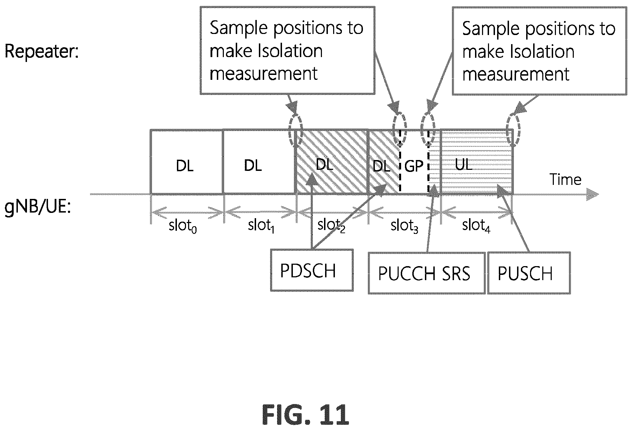

FIG. 11 is a graph illustrating an example in which the donor gNB 102 schedules UE traffic in conjunction with the repeater isolation measurement using NR physical downlink or uplink signals in a typical 4:1 DL/UL duty cycle frame structure. In this example, GP represents the gap symbols.

If necessary, the beamforming repeater 100 may apply a bandpass filter in the time domain for the isolation measurement such that the beamforming repeater 100 may "focus" on the subband in which the specific physical channel occupies.

If the beamforming repeater 100 supports multiple concurrent UEs at different BWPs, and the UEs may be served using different beams, an array of bandpass filters in the time domain may be applied to the received signal such that the isolation measurements may be performed for each BWP separately and/or concurrently.

With a dynamic isolation measurement report, the donor gNB 102 has knowledge of the spatially dependent isolation and may detect the change in isolation in real time. This may enable the donor gNB 102 to set the gain of the beam towards the UE 106 in a more optimal operation regime with reduced risk of oscillation.

The isolation measurement request message IsolationMeasurementRequest may include isolation measurement parameters for the isolation measurement. For example, the isolation measurement request message Isolation-MeasurementRequest may include a measurement profile ID identifying a measurement profile. In this example, the measurement profile may include the following parameters:

- Physical channels: PDSCH

- Time offset: starting slot/symbol number that this PDSCH signal starts

- Duration: how many slots/symbols this PDSCH signal lasts until it stops transmission (i.e., the DL to UL gap)

The beamforming repeater 100 may then send the isolation measurement report message IsolationMeasurementReport to the donor gNB 102 after obtaining the requested isolation estimate.

According to one or more example embodiments, a time domain pass band filter may be used to focus on the actual subband used by the physical channel by the UE 106 to suppress interference.

For aperiodic isolation measurement, the donor gNB 102 may trigger the measurement much like other existing aperiodic measurements in 5G NR. The aperiodic isolation estimation enables the donor gNB 102 to obtain an instant and/or current read out of the isolation in the direction of the UE 106. In this situation, the donor gNB 102 configures the access panel beam of the beamforming repeater 100 to point to the UE 106, and schedules user traffic such that the transmission is next to a transmission gap. The donor gNB 102 then instructs the beamforming repeater 100 to carry out an isolation estimate using the transmission gap.

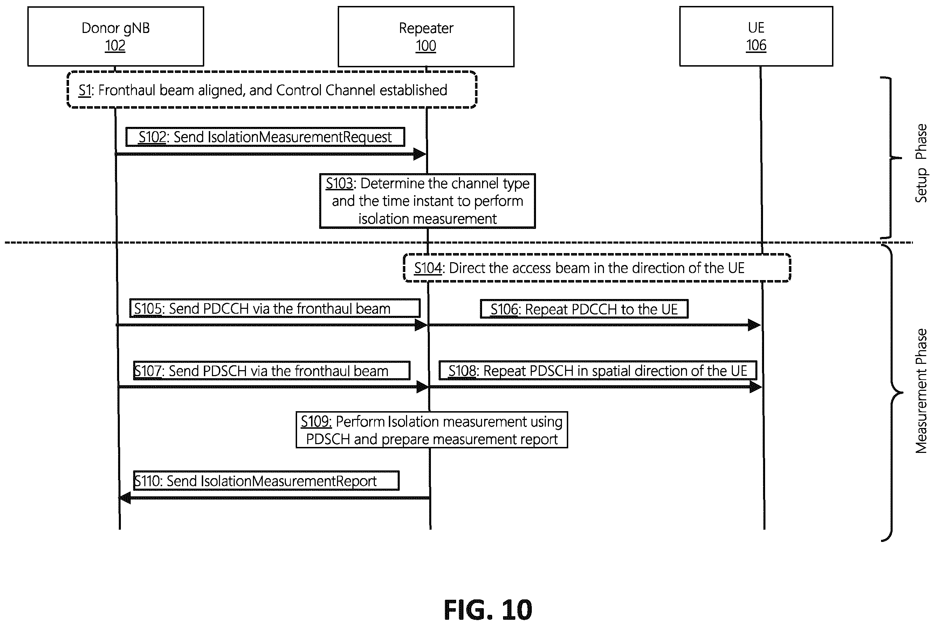

FIG. 10 is a signal flow diagram illustrating an example embodiment of a method for aperiodic isolation estimation using PDSCH signals on the DL. Although not discussed in detail, similar estimations may be performed using PUSCH signals on the UL.

Referring to FIG. 10, at S1 the beamforming repeater 100 aligns the fronthaul beam and establishes a control channel with the donor gNB 102 in the same or substantially the same manner as discussed above with regard to FIG. 9.

At S102, the donor gNB 102 sends the above-discussed isolation measurement request message Isolation-MeasurementRequest to the beamforming repeater 100 requesting aperiodic spatially dependent isolation measurement information for one or more directional beams at the access panel 1008AP.

At S103, the beamforming repeater 100 determines the isolation measurement parameters for the isolation measurements from the isolation measurement request message IsolationMeasurementRequest. In one example, the beamforming repeater 100 extracts the channel type and the time instant to perform the isolation measurement from the isolation measurement request message IsolationMeasurementRequest.

At S104, the beamforming repeater 100 directs the access panel beam in the direction of the UE 106.

At S105, the donor gNB 102 sends the PDCCH to the beamforming repeater 100 via the fronthaul panel 1008FP, and at S106 the beamforming repeater 100 repeats the PDCCH by transmitting the PDCCH via the access panel 1008AP to the UE 106.

At S107, the donor gNB 102 sends the PDSCH to the beamforming repeater 100 via the fronthaul panel 1008FP, and at S108 the beamforming repeater 100 repeats the PDSCH by transmitting the PDSCH via the access panel 1008AP to the UE 106.

At S109, the beamforming repeater 100 performs an isolation measurement based on the PDSCH in the same or substantially the same manner as discussed above with regard to S7.1 in FIG. 9, except that the measurement is performed with regard to the PDSCH. Also at S109, the beamforming repeater 100 generates an isolation measurement report message IsolationMeasurementReport including the isolation measurement for the requested beam or direction.

At S110, the beamforming repeater 100 sends the isolation measurement report message IsolationMeasurementReport to the donor gNB 102 via the control channel in the same or substantially the same manner as discussed above with regard to FIG. 9.

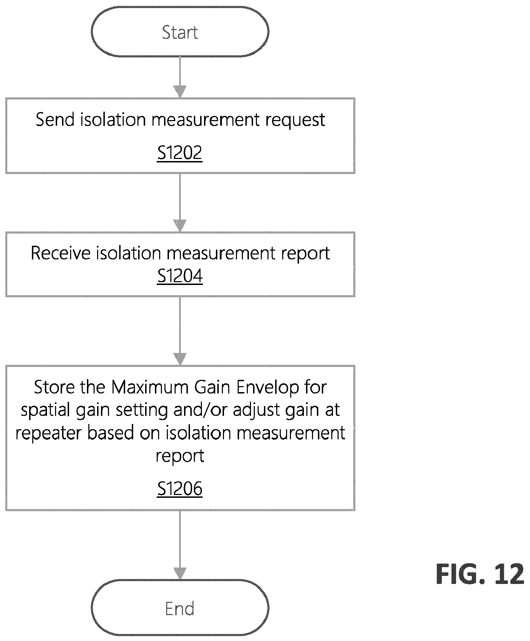

FIG. 12 is a flow chart illustrating a method of operating a donor gNB, according to example embodiments. FIG. 12 is discussed with regard to an aperiodic measurement of isolation at the beamforming repeater 100 in the DL. However, it should be understood that similar methodology may be utilized for iterations of periodic isolation measurements and/or in the UL.

Referring to FIG. 12, at S1202, the donor gNB 102 sends the above-discussed isolation measurement request message IsolationMeasurementRequest to the beamforming repeater 100 requesting spatially dependent isolation measurement information for one or more directional beams (spatial directions or beams) at the access panel 1008AP. In this example, S1202 in FIG. 12 essentially corresponds to S102 in FIG. 10.

At S1204, the donor gNB 102 receives the isolation measurement report message IsolationMeasurementReport from the beamforming repeater 100. The isolation measurement report message IsolationMeasurementReport may be generated by the beamforming repeater 100 as discussed herein.

At S1206, the donor gNB 102 stores, in a memory, a maximum gain envelop for setting the spatial gain at the beamforming repeater 100. Also, or alternatively, at S1206, the donor gNB 102 may adjust the internal gain IG at the beamforming repeater 100 (e.g., on a per-beam basis) based on the isolation measurement report message Isolation-MeasurementReport to improve coverage area of the beamforming repeater 100. The donor gNB 102 may adjust the internal gain IG at the beamforming repeater 100 as discussed *supra.*

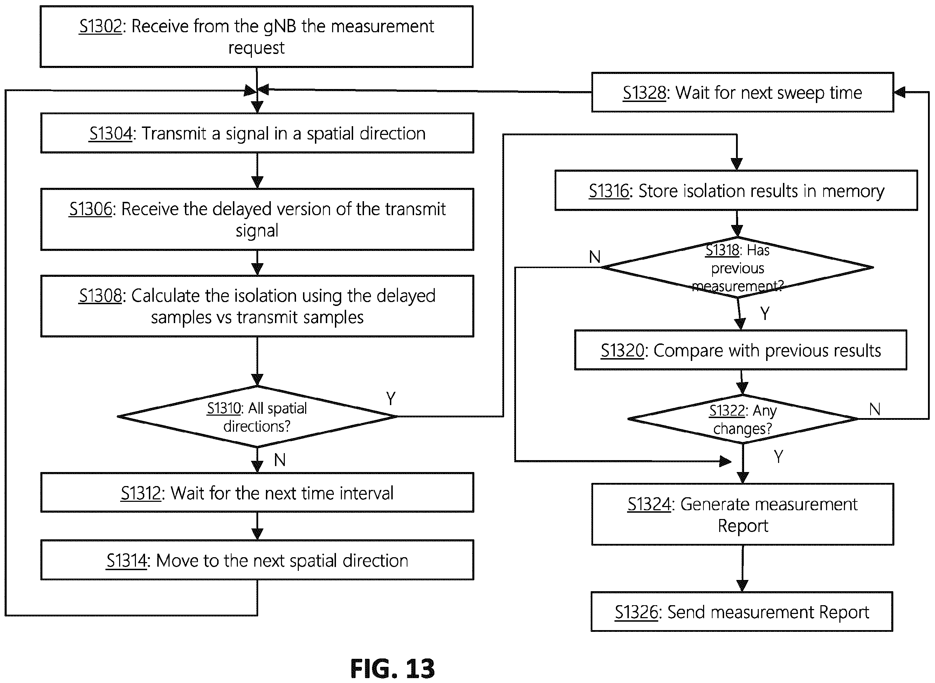

FIG. 13 is a flow chart providing a more detailed illustration of a method for isolation measurement at a beamforming repeater, according to example embodiments. FIG. 13 is discussed with regard to a measurement of isolation at the beamforming repeater 100 in the DL. However, it should be understood that a similar methodology may be utilized in the UL.

Referring to FIG. 13, at S1302 the beamforming repeater 100 receives an isolation measurement request from the donor gNB 102. In one example, the isolation measurement request may be in the form of the isolation measurement configuration message IsolationMeasurementConfiguration as discussed above.

At S1304, in response to receiving an isolation measurement signal (e.g., SSB, CSI-RS, PDSCH, etc.) from the donor gNB 102, the beamforming repeater 100 repeats (transmits) the isolation measurement signal to the UE 106 in a current (e.g., first) spatial direction (beam).

At S1306, the beamforming repeater 100 receives the delayed version of the transmitted isolation measurement signal (self-interference signal) at the fronthaul panel 1008FP.

At S1308, the beamforming repeater 100 calculates the isolation for the given spatial direction (beam) based on the transmitted isolation measurement signal and the delayed isolation measurement signal as discussed above. The calculated isolation may be stored in buffer (e.g., temporarily).

At S1310, the beamforming repeater 100 determines whether isolation has been measured for all spatial directions in the steering range of the beamforming repeater 100.

If the beamforming repeater 100 has not yet measured isolation for all spatial directions in the steering range, then at S1312 the beamforming repeater 100 waits for a next applicable isolation measurement interval.

At the next isolation measurement interval, the beamforming repeater 100 moves to the next spatial direction (beam) in the steering range at S1314. The process then returns to S1304 and continues as discussed herein for the next spatial direction (or beam).

Returning to S1310, if the beamforming repeater 100 has measured isolation for all spatial directions in the steering range, then the beamforming repeater 100 stores the isolation results for all spatial directions in the memory.

At S1318, the beamforming repeater 100 determines whether prior isolation measurements for the spatial directions are stored in the memory.

If no previous isolation measurements are present, then at S1324 the beamforming repeater 100 generates an isolation measurement report message IsolationMeasurementReport as discussed above. The beamforming repeater 100 then sends the isolation measurement report message IsolationMeasurementReport to the donor gNB 102 at S1326, as discussed above.

Returning to S 1318, if previous isolation measurements are present, then at S1320 the beamforming repeater 100 compares the current isolation measurements with the previous isolation measurements to determine whether any of the isolation measurements are different from, or new relative to, the previous isolation measurements.

If one or more of the current isolation measurements are different from the previous isolation measurements (or new measurements), then the process proceeds to S1324 and continues as discussed herein.

Returning to S1322, if the current isolation measurements are the same as the previous isolation measurements (there are no changes from the previous measurements to the current measurements), then the beamforming repeater 100 waits for the next sweep time at S1328. The process then returns to S1304 and continues as discussed herein.

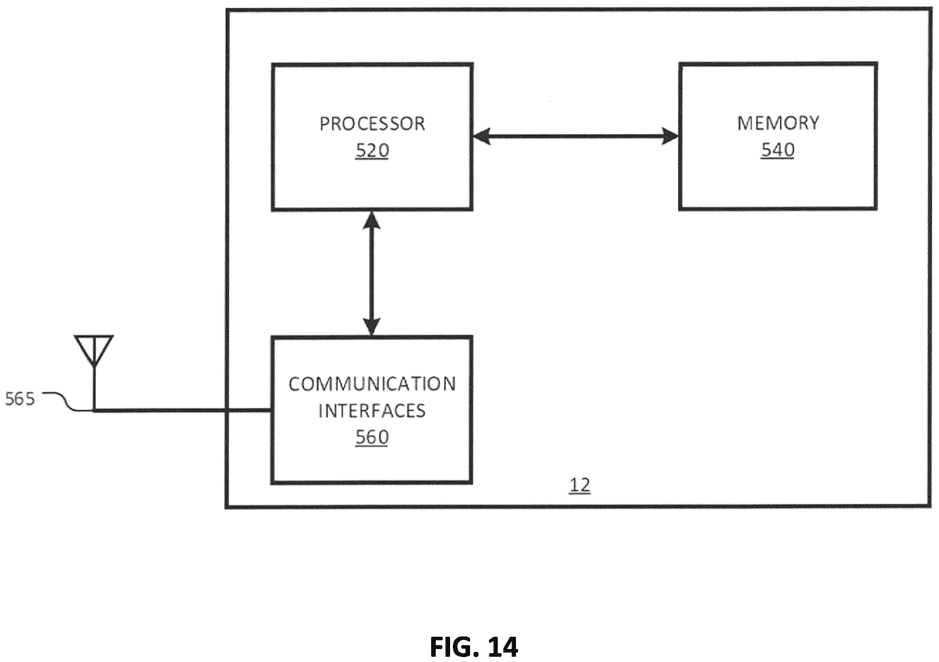

FIG. 14 illustrates an example embodiment of network element shown in FIGS. 1-3B. The network element may serve as the donor gNB 102, the beamforming repeater 100 and/or the UE 106. For the sake of brevity, however, FIG. 14 will be described with regard to donor gNB 102.

As shown, the network element includes: a memory 540; a processor 520 connected to the memory 540; various interfaces 560 connected to the processor 520; and one or more (e.g., a plurality of) antennas or antenna panels 565 connected to the various interfaces 560. The various interfaces 560 and the antenna 565 may constitute a transceiver for transmitting/receiving data from/to other network elements (e.g., UE 106, beamforming repeater 100, etc.) via one or more wireless beams. As will be appreciated, depending on the implementation of the network element, the network element may include many more components than those shown in FIG. 14. However, it is not necessary that all of these generally conventional components be shown in order to disclose the illustrative example embodiment.

The memory 540 may be a computer readable storage medium that generally includes a random access memory (RAM), read only memory (ROM), and/or a permanent mass storage device, such as a disk drive. The memory 540 also stores an operating system and any other routines/modules/applications for providing the functionalities of the network element (e.g., functionalities of a gNB, UE, beamforming repeater, methods according to the example embodiments, etc.) to be executed by the processor 520. These software components may also be loaded from a separate computer readable storage medium into the memory 540 using a drive mechanism (not shown). Such separate computer readable storage medium may include a disc, tape, DVD/CD-ROM drive, memory card, or other like computer readable storage medium (not shown). In some example embodiments, software components may be loaded into the memory 540 via one of the various interfaces 560, rather than via a computer readable storage medium.

The processor 520 may be configured to carry out instructions of a computer program by performing the arithmetical, logical, and input/ output operations of the system. Instructions may be provided to the processor 520 by the memory 540.

The various interfaces 560 may include components that interface the processor 520 with the antenna 565, or other input/output components. As will be understood, the various interfaces 560 and programs stored in the memory 540 to set forth the special purpose functionalities of the network element will vary depending on the implementation of the network element.

The interfaces 560 may also include one or more user input devices (e.g., a keyboard, a keypad, a mouse, or the like) and user output devices (e.g., a display, a speaker, or the like).

As discussed herein, one or more example embodiments may provide necessary signaling between a donor gNB and a beamforming repeater to support dynamic isolation measurement in a 5G NR network. In at least one example embodiment, a new measurement item (e.g., repeater-isolation-r18) may be added.

One or more example embodiments may enable isolation measurement across all spatial directions within the steering range of the access panel against the fronthaul panel. This is unique for a NR beamforming (or smart) repeater, as the isolation may be spatially dependent.

One or more example embodiments also provide dynamic measurement to track isolation changes in one or more spatial directions.

A beamforming repeater's coverage pattern may be spatial-direction dependent. One or more example embodiments may enable higher gain to be used when serving UEs in directions with higher isolation to explore the full dynamic range of the repeater.

One or more example embodiments define a new signaling procedure to measure spatially dependent isolation between the donor gNB and the beamforming repeater, which includes the new measurement object and report configurations that allow periodic, semi-persistent, aperiodic and/or event-based reporting.

One or more example embodiments provide methods of measuring isolation between the fronthaul panel and the access panel that leverage the TDD gap and may perform isolation measurement in the background using the existing 3GPP physical channels.

According to one or more example embodiments, coverage for the beamforming repeater may be improved without triggering self-oscillation. The internal gain of the conventional repeater may be constrained by the worst case (i.e., smallest) isolation. But, one or more example embodiments allow the donor gNB to set a higher gain at the beamforming repeater in the directions that have higher isolation to improve coverage.

One or more example embodiments allow the beamforming repeater to dynamically adjust the internal gain, either autonomously based on a predefined policy or instructed by the donor gNB to mitigate and/or avoid oscillation due to events like blockage, foliage, etc.

Example embodiments do not necessarily require a dedicated measurement gap. Rather, one or more example embodiments may leverage the TDD gap for isolation measurement, which may be performed in the background without impacting the NR user traffic.

Example embodiments need not utilize a special "test" signal for isolation measurement, which may lead to spectral degradation. Rather, example embodiments may leverage existing NR physical channels.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/ acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing user equipment, base stations, eNBs, RRHs, gNBs, femto base stations, network controllers, computers, beamforming repeaters, or the like. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, user equipment, base stations, eNBs, RRHs, gNBs, femto base stations, network controllers, computers, beamforming repeaters, or the like, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

**Claims**

1. A network element comprising:

   at least one processor; and
   at least one memory including computer program code, the at least one memory and the computer program code configured to, with the at least one processor, cause the network element to adjust an internal gain between a fronthaul panel and an access panel at a beamforming repeater in a wireless network based on spatial direction dependent isolation measurement information from the beamforming repeater.

2. The network element of claim 1, wherein the spatial direction dependent isolation measurement information includes a spatial direction dependent isolation measurement for each of a plurality of beams in a steering range of the access panel.

3. The network element of claim 2, wherein the at least one memory and the computer program code are configured to, with the at least one processor, cause the network element to adjust the internal gain on a per-beam basis.

4. The network element of claim 1, wherein the at least one memory and the computer program code are configured to, with the at least one processor, cause the network element to

   transmit an isolation measurement request to the beamforming repeater, the isolation measurement request requesting the spatial direction dependent isolation measurement information for an access beam at the access panel, and
   receive the spatial direction dependent isolation measurement information transmitted in response to the isolation measurement request.

5. The network element of claim 4, wherein the isolation measurement request includes a measurement profile identifier indicative of measurement parameters for performing a spatial direction dependent isolation measurement for the access beam.

6. The network element of claim 1, wherein the at least one memory and the computer program code are configured to, with the at least one processor, cause the network element to

   transmit an isolation measurement configuration message to the beamforming repeater, the isolation measurement configuration message requesting the spatial direction dependent isolation measurement information and defining parameters for a spatial direction dependent isolation measurement for access beams within a steering range of the access panel, and
   receive the spatial direction dependent isolation measurement information transmitted in response to the isolation measurement configuration message.

7. The network element of claim 6, wherein the parameters include at least one of a measurement object, a measurement report configuration, measurement identification information or quantity configuration information.

8. The network element of claim 1, wherein the spatial direction dependent isolation measurement information is in the form of an isolation mask.

9.  A beamforming repeater comprising:

    at least one access panel configured to communicate via a plurality of beams;
    at least one fronthaul panel;
    at least one processor; and
    at least one memory including computer program code, the at least one memory and the computer program code configured to, with the at least one processor, cause the beamforming repeater to

    generate, for at least one of the plurality of beams, spatial direction dependent isolation measurement information for isolation between a first of the at least one access panel and a first of the at least one fronthaul panel, and
    output the spatial direction dependent isolation measurement information to a network element.

10. The beamforming repeater of claim 9, wherein the at least one memory and the computer program code are configured to, with the at least one processor, cause the beamforming repeater to
    adjust, for the at least one of the plurality of beams, an internal gain between the first of the at least one fronthaul panel and the first of the at least one access panel based on internal gain control information from the network element, the internal gain control information generated based on the spatial direction dependent isolation measurement information.

11. The beamforming repeater of claim 10, wherein the at least one memory and the computer program code are configured to, with the at least one processor, cause the beamforming repeater to adjust the internal gain on a per-beam basis.

12. The beamforming repeater of claim 9, wherein the spatial direction dependent isolation measurement information includes a spatial direction dependent isolation measurement for each of the plurality of beams.

13. The beamforming repeater of claim 9, wherein the at least one memory and the computer program code are configured to, with the at least one processor, cause the beamforming repeater to

    receive an isolation measurement request requesting a spatial direction dependent isolation measurement for the at least one of the plurality of beams, and
    generate the spatial direction dependent isolation measurement information based on the spatial direction dependent isolation measurement and in response to the isolation measurement request.

14. The beamforming repeater of claim 13, wherein the isolation measurement request includes a measurement profile identifier indicative of measurement parameters for performing the spatial direction dependent isolation measurement.

15. The beamforming repeater of claim 9, wherein the at least one memory and the computer program code are configured to, with the at least one processor, cause the beamforming repeater to

    receive an isolation measurement configuration message requesting the spatial direction dependent isolation measurement information and defining parameters for spatial direction dependent isolation measurement for the at least one of the plurality of beams, and
    generate the spatial direction dependent isolation measurement information in response to the isolation measurement configuration message.

106 — UE

1008AP

Access Panel

Beamforming Repeater 100

Self Interference

Fronthaul Panel

1008FP

Isolation Measurement request

Isolation Measurement report

102

Donor gNB

**FIG. 1**

EP 4 170 926 A1

## FIG. 2A

Self-interference

1003

Pr | Transceiver 1002 | IG(φ) | Transceiver 1004 | Pt

1008FP

Pr(φ) → Controller 1006 ← Pt(φ)

100

1008AP

φ

## FIG. 2B

Self-interference

1005

Pt | Transceiver 1002 | IG(φ) | Transceiver 1004 | Pr

1008FP

Pt(φ) → Controller 1007 ← Pr(φ)

100

1008AP

φ

1003

Self-interference

| 102 gNB |

x

Pr

100 IG

Pt

y

| 106 UE |

1008FP

**FIG. 3A**

1008AP

1005

Self-interference

| 106 UE |

x

Pr

100 IG

Pt

y

| 102 gNB |

1008AP

**FIG. 3B**

1008FP

EP 4 170 926 A1

**FIG. 4**

## Case I: no delay spread

**FIG. 5**

## Case II: small delay spread for echo

**FIG. 6**

Case: small delay spread for FH

**FIG. 7**

EP 4 170 926 A1

Case: FH/echo delay spread > D

**FIG. 8**

| Donor gNB 102 | Repeater 100 | UE 106 |

**Setup Phase**

S1:Fronthaul beam aligned, and Control Channel established

S2: Send IsolationMeasurementConfiguration

S3: Determine the SSB subset from gNB for the repeater and time instant to measure isolation

**Measurement Phase**

S4.1: Direct the access beam towards direction_1

S5.1: Send SSB via the fronthaul beam

S6.1: Repeat SSB in direction_1

S7.1: Perform Isolation measurement in direction_1

S4.2: Direct the access beam towards direction_2

S5.2: Send SSB via the fronthaul beam

S6.2: Repeat SSB in direction_2

S7.2: Perform Isolation measurement in direction_2

...

S4.N: Direct the access beam towards direction_N

S5.N: Send SSB via the fronthaul beam

S6.N: Repeat SSB in direction_N

:S7.N Perform Isolation measurement in direction_N

S8: Aggregate the Isolation results into Isolation Mask and prepare measurement report

S9: Send IsolationMeasurementReport

**FIG. 9**

FIG. 10

EP 4 170 926 A1

FIG. 11

Start

Send isolation measurement request
S1202

Receive isolation measurement report
S1204

Store the Maximum Gain Envelop for spatial gain setting and/or adjust gain at repeater based on isolation measurement report
S1206

End

FIG. 12

EP 4 170 926 A1

S1302: Receive from the gNB the measurement request

S1328: Wait for next sweep time

S1304: Transmit a signal in a spatial direction

S1316: Store isolation results in memory

S1306: Receive the delayed version of the transmit signal

S1318: Has previous measurement?

N

S1308: Calculate the isolation using the delayed samples vs transmit samples

Y

S1320: Compare with previous results

S1310: All spatial directions?

Y

S1322: Any changes?

N

N

S1312: Wait for the next time interval

Y

S1314: Move to the next spatial direction

S1324: Generate measurement Report

S1326: Send measurement Report

**FIG. 13**

EP 4 170 926 A1

**FIG. 14**

```
           ┌──────────────┐
           │    Start     │
           └──────┬───────┘
                  │
                  ▼
    ┌──────────────────────────────────┐
    │  Monitor average receiving power  │
    │       over period of duration D   │
    │                                   │
    │              S1504                │
    └──────────────┬───────────────────┘
                   │
                   ▼
 ┌─────────────────────────────────────────────┐
 │ Obtain average receiving power over multiple │
 │        sampling intervals of length D        │
 │                                              │
 │                   S1506                       │
 └──────────────────┬──────────────────────────┘
                    │
                    ▼
 ┌─────────────────────────────────────────────┐
 │ Compute isolation based on average receiving │
 │                  power                       │
 │                                              │
 │                   S1508                      │
 └──────────────────┬──────────────────────────┘
                    │
                    ▼
           ┌──────────────┐
           │     End      │
           └──────────────┘
```

**FIG. 15**

Europäisches
Patentamt

European
Patent Office

Office européen
des brevets

# EUROPEAN SEARCH REPORT

Application Number

EP 22 19 9504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/235326 A1 (SONY CORP) 26 November 2020 (2020-11-26) * the whole document * & EP 3 975 604 A1 (SONY GROUP CORP [JP]) 30 March 2022 (2022-03-30) * paragraphs [0090], [0099], [0139], [0174] – [0180], [0194] – [0196] * * figures 9, 16 * | 1-15 | INV. H04B7/155 H04B7/06 |
| A | US 2021/143895 A1 (KIM SEON AE [KR]) 13 May 2021 (2021-05-13) * paragraphs [0062] – [0064], [0069] * * figures 2, 6, 7 * | 1-15 | |
| A | US 2020/358501 A1 (HORMIS RAJU [US] ET AL) 12 November 2020 (2020-11-12) * claims 4, 5 * | 1-15 | |
| A | US 2009/285147 A1 (SUBASIC BOJAN [CA] ET AL) 19 November 2009 (2009-11-19) * the whole document * | 1-15 | TECHNICAL FIELDS SEARCHED (IPC) |
| A | US 2020/280127 A1 (HORMIS RAJU [US] ET AL) 3 September 2020 (2020-09-03) * figures 2, 3, 10 * * paragraphs [0094], [0126] * | 1-15 | H04B H04W |

The present search report has been drawn up for all claims

| Place of search | Date of completion of the search | Examiner |
|---|---|---|
| Munich | 10 March 2023 | Franz, Stefan |

EPO FORM 1503 03.82 (P04C01)

## ANNEX TO THE EUROPEAN SEARCH REPORT
## ON EUROPEAN PATENT APPLICATION NO.

EP 22 19 9504

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2023

| Patent document cited in search report | | Publication date | Patent family member(s) | | Publication date |
|---|---|---|---|---|---|
| WO 2020235326 | A1 | 26-11-2020 | EP | 3975604 A1 | 30-03-2022 |
| | | | KR | 20220009382 A | 24-01-2022 |
| | | | US | 2022232481 A1 | 21-07-2022 |
| | | | WO | 2020235326 A1 | 26-11-2020 |
| US 2021143895 | A1 | 13-05-2021 | NONE | | |
| US 2020358501 | A1 | 12-11-2020 | US | 2020358501 A1 | 12-11-2020 |
| | | | WO | 2020227482 A1 | 12-11-2020 |
| US 2009285147 | A1 | 19-11-2009 | NONE | | |
| US 2020280127 | A1 | 03-09-2020 | CN | 113475007 A | 01-10-2021 |
| | | | EP | 3931977 A1 | 05-01-2022 |
| | | | US | 2020280127 A1 | 03-09-2020 |
| | | | WO | 2020176267 A1 | 03-09-2020 |

EPO FORM P0459

For more details about this annex : see Official Journal of the European Patent Office, No. 12/82